# EUROPEAN PATENT APPLICATION

(11) **EP 1 998 581 A1**
(43) Date of publication of application: **03.12.2008**
(21) Application number: 06832573.7
(22) Date of filing: 14.11.2006
(51) Int. Cl.: H04Q 7/36

(54) **MOBILE COMMUNICATION SYSTEM, BASE STATION, AND INTER-CELL INTERFERENCE REDUCTION METHOD**

(30) Priority: 27.02.2006 JP 2006050449
(71) Applicant: NEC Corporation, Minato-ku Tokyo 108-8001 (JP)
(72) Inventor: HASEBA, Yukio, Tokyo 108-8001 (JP); IWASAKI, Motoya, Tokyo 108-8001 (JP); KAWABATA, Hisashi, Tokyo 108-8001 (JP); NISHIMURA, Osami, Tokyo 108-8001 (JP); OKETANI, Kengo, Tokyo 108-8001 (JP); KONDOU, Daisuke, Tokyo 108-8001 (JP)
(74) Representative: Glawe, Delfs, Moll
(86) International application number: PCT/JP2006/322611
(87) International publication number: WO 2007/097076

(57) **Abstract**

Base stations (100-1 to 100-3) communicate with terminals (102-1 to 102-2), divides a used frequency into a plurality of frequency blocks, and assigns the divided frequency block to terminal (102-1 to 102-2), in which a position at which terminal (102-1 to 102-2) exists is determined, and if it is determined that terminal (102-1 to 102-2) exists at the edge of cell (101-1 to 101-3), the assigned frequency block is set as a cell edge frequency block that is to be dynamically assigned at the edge of cell (101-1 to 101-3). In addition, if the cell edge frequency block has already been assigned to another terminal, this cell edge frequency block is assigned to terminal (102-1 to 102-2).

## Description

### Technical Field

The present invention relates to a mobile communication system, a base station, and an inter-cell interference reduction method for reducing interference of radio waves between adjacent cells.

### Background Art

Conventionally, in a cell that is an area covered by a base station, the same broad frequency band is used with respect to one cell, and the frequency band is divided into some number of frequency blocks in the cell. Then, using the divided frequency block, communication is performed between a terminal and the base station existing in the cell. When assigning of the frequency blocks to the terminal, a propagation condition is measured by the base station based on a pilot signal sent from the terminal, and a frequency block whose propagation condition is good is assigned to the terminal, thus performing communication.

In addition, to prevent overlapping of timings to send data from a plurality of terminals existing in the same frequency block each other, the base station is provided with a scheduler which controls such that data is transmitted from terminals in the order beginning with the terminal that has the best propagation condition. Then, in each frequency block, a time in which each terminal uses the frequency of a respective frequency block is determined by time sharing. That is, transmission timings are scheduled.

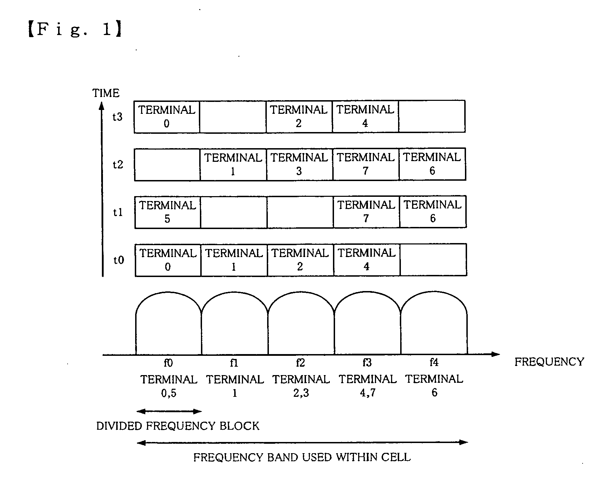

Figure 1 is a diagram for describing a transmission timing control method performed by a scheduler provided in a conventional base station.

Figure 1 illustrates an example in which a frequency band used in a cell is divided into five frequency blocks f0 to f4, and eight terminals 0 to 7 exist in the cell. Then, terminal 0 and terminal 5 are assigned to frequency block f0. Terminal 1 is assigned to frequency block f1. Terminal 2 and terminal 3 are assigned to frequency block f2. Terminal 4 and terminal 7 are assigned to frequency block f3. Terminal 6 is assigned to frequency block f4. In each frequency block, a time in which each terminal uses a frequency is assigned by time sharing. For example, in frequency block f0, in t0, frequency f0 is used by terminal 0. In t1, frequency f0 is used by terminal 5. In t3, frequency f0 is used by terminal 0.

In recent years, in a case where a terminal exists at the edge of a cell in a mobile communication system, radio waves transmitted from the terminal become interference interfering radio waves for a base station which covers a cell adjacent to the cell, thereby degrading communication quality between the base station covering the adjacent cell and the terminal existing in this cell.

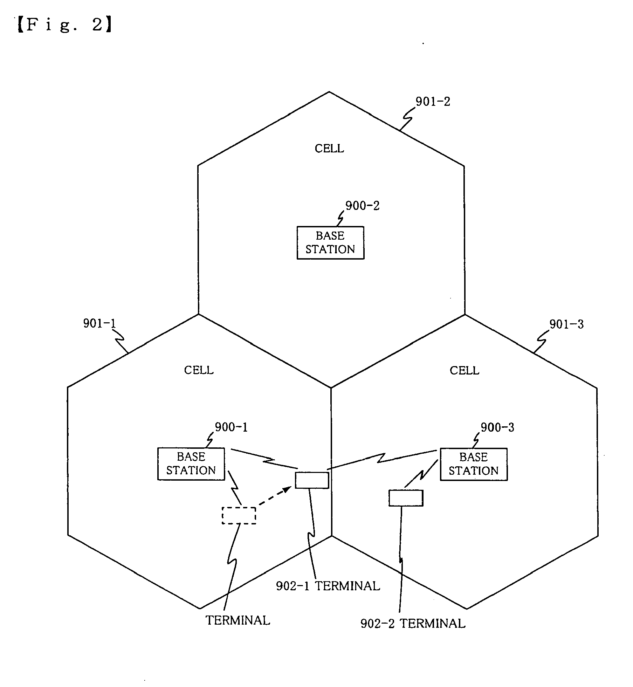

Figure 2 is a diagram which shows one exemplary embodiment of a conventional mobile communication system.

In the mobile communication system shown in Figure 2, base stations 900-1 to 900-3, cells 901-1 to 901-3, and terminals 902-1 to 902-2 are provided.

Cells 901-1 to 901-3 are areas covered by base stations 900-1 to 900-3 respectively. Terminal 902-1 exists in cell 901-1 and is communicating with base station 900-1, and moving toward cell 901-3. Terminal 902-2 exists in cell 901-3 and is communicating with base station 900-3.

When a frequency block used for communication between terminal 902-1 and base station 900-1 is the same as a frequency block used for communication between terminal 902-2 and base station 900-3, base station 900-1 which schedules the transmission timing of terminal 902-1 and base station 900-3 which schedules the transmission timing of terminal 902-2 are independent of each other. Therefore, the transmission timings of sending data from respective terminals may overlap. Thus, when terminal 902-1 moves close to a boundary between cell 901-1 and cell 901-3, a signal sent from terminal 902-1 becomes an interfering signal for base station 900-3, and causes degradation of communication quality between base station 900-3 and terminal 902-2.

As a method for reducing such interference, there has been proposed a method in which a specific frequency is used near a boundary between cells.

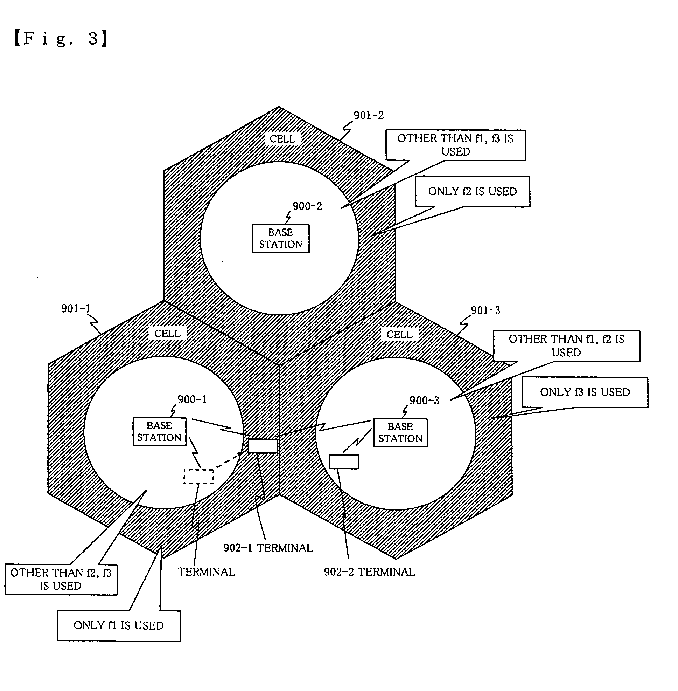

Figure 3 is a diagram for describing the method in which a specific frequency is used near a boundary between cell.

As shown in Figure 3, in cell 901-1, a frequency which can be used in a shaded area that is at the edge of cell 901-1 is only f1, and a frequency which can be used in the remaining area (inside the circle) is a frequency other than f2, f3. In cell 901-2, a frequency which can be used in a shaded area that is at the edge of cell 901-2 is only f2, and a frequency which can be used in the remaining area (inside the circle) is a frequency other than f1, f3. In cell 901-3, a frequency which can be used in a shaded area that is at the edge of cell 901-3 is only f3, and a frequency which can be used in the remaining area (inside the circle) is a frequency other than f1, f2. As described above, a method has been proposed in which a used frequency band is divided fixedly into bands separately used for a terminal near a boundary of a cell and a terminal within the boundary so that the used bands are prevented from overlapping between adjacent cells. Then, a method has been proposed in which division into a plurality of frequency blocks is performed as shown in Figure 1, and a terminal belonging to each frequency block is assigned based on the position of the terminal such as whether or not the terminal exists at a boundary of a cell as show in Figure 3 (for example, see Japanese Patent Laid-Open No. 2003-517802).

In addition, a method has been proposed in which transmission power is restricted for reducing inter-cell interference in an assigned frequency pattern (for example, Japanese Patent Laid-Open No. 2005-328519).

However, in the method described in Japanese Patent Laid-Open No. 2003-517802, a frequency which is used when a terminal exists at a boundary of a cell is assigned in a fixed manner. Therefore, there is a problem that such a frequency cannot be used in an area other than the boundary of the cell at all times, and the frequency utilization efficiency is reduced.

In the method described in Japanese Patent Laid-Open No. 2005-328519, there is a problem that transmission power from a terminal must be restricted.

### Disclosure of the Invention

To solve the problems as described above, the present invention is intended to provide a mobile communication system, a base station, and an inter-cell interference reduction method which can easily reduce inter-cell interference while efficiently using frequencies.

To achieve the above described object, the present invention is a mobile communication system including a terminal and a plurality of adjacent base stations which communicate with the terminal wherein the base station divides a frequency used by the base station into a plurality of frequency blocks and assigns the divided frequency block to the terminal, characterized in that
the base station determines a position at which the terminal exists, and if it is determined that the terminal exists at the edge of a cell covered by the base station, sets the assigned frequency block as a cell edge frequency block that is to be dynamically assigned at the edge of the cell.

Further, it is characterized in that the base station measures a propagation delay time between the base station and the terminal, and determines the position at which the terminal exists based on the measured propagation delay time.

Further, it is characterized in that, when it is determined that the terminal exists at the edge of the cell, if the cell edge frequency block has already been assigned to another terminal, the base station assigns the cell edge frequency block assigned to the another terminal to the terminal.

Further, it is characterized in that the base station comprises:
position determination means for determining the position at which the terminal exists; and
frequency block assigning means for, when the position determination means determines that the terminal exists at the edge of the cell, setting the assigned frequency block as the cell edge frequency block that is to be dynamically assigned at the edge of the cell.

Further, it is characterized in that the base station comprises
propagation delay measuring means for measuring a propagation delay time between the base station and the terminal, and
the position determination means determines the position at which the terminal exists based on the propagation delay time measured by the propagation delay measuring means.

Further, it is characterized in that, when the position determination means determines that the terminal exists at the edge of the cell, if the cell edge frequency block has already been assigned to another terminal, the frequency block assigning means assigns the cell edge frequency block assigned to the another terminal to the terminal.

In addition, a base station communicates with a terminal, divides a used frequency into a plurality of frequency blocks, and assigns the divided frequency block to the terminal,
wherein a position at which the terminal exists is determined, and if it is determined that the terminal exists at an edge of a cell covered by the base station, the assigned frequency block is set as a cell edge frequency block that is to be dynamically assigned at the edge of the cell.

Further, it is characterized in that a propagation delay time between the base station and the terminal is measured, and the position at which the terminal exists is determined based on the measured propagation delay time.

Further, it is characterized in that, when it is determined that the terminal exists at the edge of the cell, if the cell edge frequency block has already been assigned to another terminal, the cell edge frequency block assigned to the another terminal is assigned to the terminal.

Further, it is characterized by comprising:
position determination means for determining the position at which the terminal exists; and
frequency block assigning means for, when the position determination means determines that the terminal exists at the edge of the cell, setting the assigned frequency block as the cell edge frequency block that is to be dynamically assigned at the edge of the cell.

Further, it is characterized by comprising propagation delay measuring means for measuring a propagation delay time between the base station and the terminal,
wherein the position determination means determines the position at which the terminal exists based on the propagation delay time measured by the propagation delay measuring means.

Further, it is characterized in that, when the position determination means determines that the terminal exists at the edge of the cell, if the cell edge frequency block has already been assigned to another terminal, the frequency block assigning means assigns the cell edge frequency block assigned to the another terminal to the terminal.

In addition, an inter-cell interference reduction method in a mobile communication system including a terminal and a plurality of adjacent base stations which communicate with the terminal, comprises:
processing by the base station to divide a frequency used by the base station into a plurality of frequency blocks;
processing by the base station to determine a position at which the terminal exists;
processing by the base station to assign the divided frequency block to the terminal; and
processing by the base station to, when it is determined that the position at which the terminal exists is at an edge of a cell covered by the base station, set the assigned frequency block as a cell edge frequency block that is to be dynamically assigned at the edge of the cell.

Further, it is characterized by comprising:
processing by the base station to measure a propagation delay time between the base station and the terminal; and
processing by the base station to determine the position at which the terminal exists based on the measured propagation delay time.

Further, it is characterized by comprising processing by the base station to, when it is determined that the terminal exists at the edge of the cell, if the cell edge frequency block has already been assigned to another terminal, assign the cell edge frequency block assigned to the another terminal to the terminal.

In the present invention configured as described above, a frequency used by a base station is divided into a plurality of frequency blocks, the divided frequency block is assigned to a terminal which communicates with the base station, a position at which the terminal exists is determined by the base station, and if the position at which the terminal exists is at an edge of a cell covered by the base station, the assigned frequency block is set as a cell edge frequency block that is to be dynamically assigned at the edge of the cell.

In this way, since a cell edge frequency block is not fixed to a preset frequency block, and since a frequency block being used by a terminal existing at a cell edge is variably set as the cell edge frequency block, interference between adjacent cells can be reduced while a frequency band used by a base station is effectively used.

As described above, the present invention is configured to divide a frequency used by a base station into a plurality of frequency blocks, assign the divided frequency block to the terminal which communicates with the base station, determine a position at which terminal exists by the base station, and, if the position at which the terminal exists is at an edge of a cell covered by the base station, set the assigned frequency block as a cell edge frequency block that is to be dynamically assigned at the edge of the cell. Accordingly, inter-cell interference can be easily reduced while frequencies are efficiently used.

### Brief Description of the Drawings

Figure 1 is a diagram for describing a transmission timing control method performed by a scheduler provided in a conventional base station;
Figure 2 is a diagram which shows one exemplary embodiment of a conventional mobile communication system;
Figure 3 is a diagram for describing a method in which a specific frequency is used near a boundary between cells;
Figure 4 is a diagram which shows one exemplary embodiment of a mobile communication system of the present invention;
Figure 5 is a diagram which shows one configuration example of a base station shown in Figure 4;
Figure 6 is a flowchart for describing an inter-cell interference reduction method in the base station shown in Figure 5 in the mobile communication system shown in Figure 4;
Figure 7 is a diagram for describing details of processing of frequency block assignment and transmission scheduling which is described in steps 5 to 9 of the flowchart shown in Figure 6;
Figure 8 is a flowchart for describing another inter-cell interference reduction method in the base station shown in Figure 5 in the mobile communication system shown in Figure 4; and
Figure 9 is a diagram for describing details of processing of frequency block assignment and transmission scheduling which is described in steps 26 to 31 of the flowchart shown in Figure 8.

### Best Mode for Carrying Out the Invention

Hereinafter, exemplary embodiments of the present invention will be described with reference to the drawings.

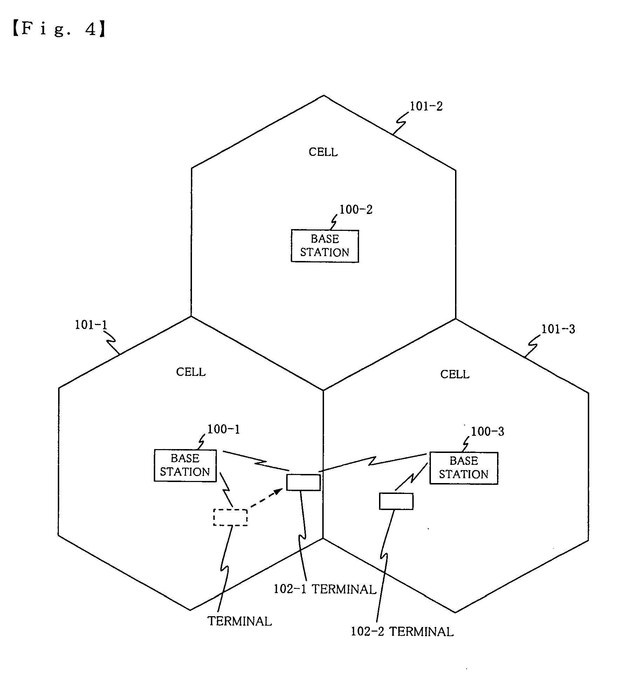

Figure 4 is diagram which shows one exemplary embodiment of the mobile communication system of the present invention.

As shown in Figure 4, the exemplary embodiment is composed of base stations 100-1 to 100-3 and terminals 102-1 to 102-2. Then, areas where communication is allowed between terminals 102-1 to 102-2 and base stations 100-1 to 100-3 are each defined in cells 101-1 to 101-3. Terminal 102-1 moves within cell 101-1 toward cell 101-3. Although the number of base stations 100-1 to 100-3 is three in this configuration, as will be described, the number thereof is not limited to three for carrying out the present invention. Although the number of terminals 102-1 to 102-2 is two in this configuration, as will be described, the number thereof is not limited to two for carrying out the present invention.

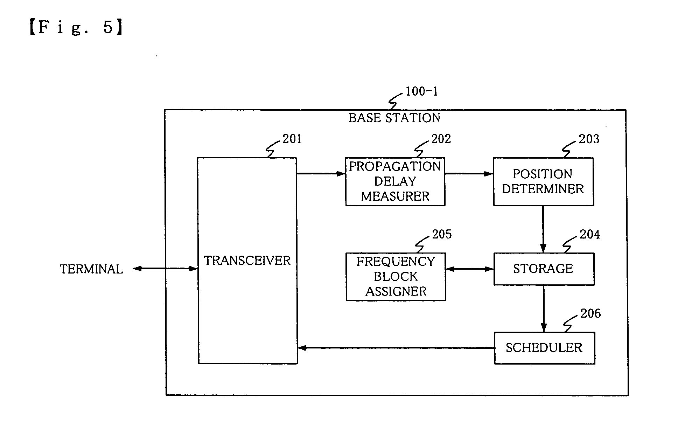

Figure 5 is one configuration example of base station 100-1 shown in Figure 4. Also, base stations 100-2 to 100-3 shown in Figure 4 have the same configuration as base station 100-1.

As shown in Figure 5, base station 100-1 shown in Figure 4 includes transceiver 201, propagation delay measurer 202, position determiner 203, storage 204, frequency block assigner 205, and scheduler 206. In Figure 5, only components relating to the present invention are shown from among components of base station 100-1.

Transceiver 201 sends/receives data between base station 100-1 and terminal 102-1 to 102-2. Propagation delay measurer 202 measures, as a propagation delay time, a time from when a propagation delay measurement signal, which is to be sent from base station 100-1 to terminal 102-1 to 102-2, is sent until the time when the signal is returned from terminal 102-1 to 102-2 and received. Position determiner 203 determines a position at which terminal 102-1 to 102-2 exists based on the propagation delay time measured by propagation delay measurer 202. Storage 204 stores the position of terminal 102-1 to 102-2 determined by position determiner 203. Frequency block assigner 205 assigns a frequency block whose propagation condition is good to terminal 102-1 to 102-2 based on the position of terminal 102-1 to 102-2 stored in storage 204. Scheduler 206 schedules transmission timing of uplink data sent from terminal 102-1 to 102-2 assigned to the frequency block.

Hereinafter, an inter-cell interference reduction method in base station 100-1 shown in Figure 5 in the mobile communication system shown in Figure 4 will be described.

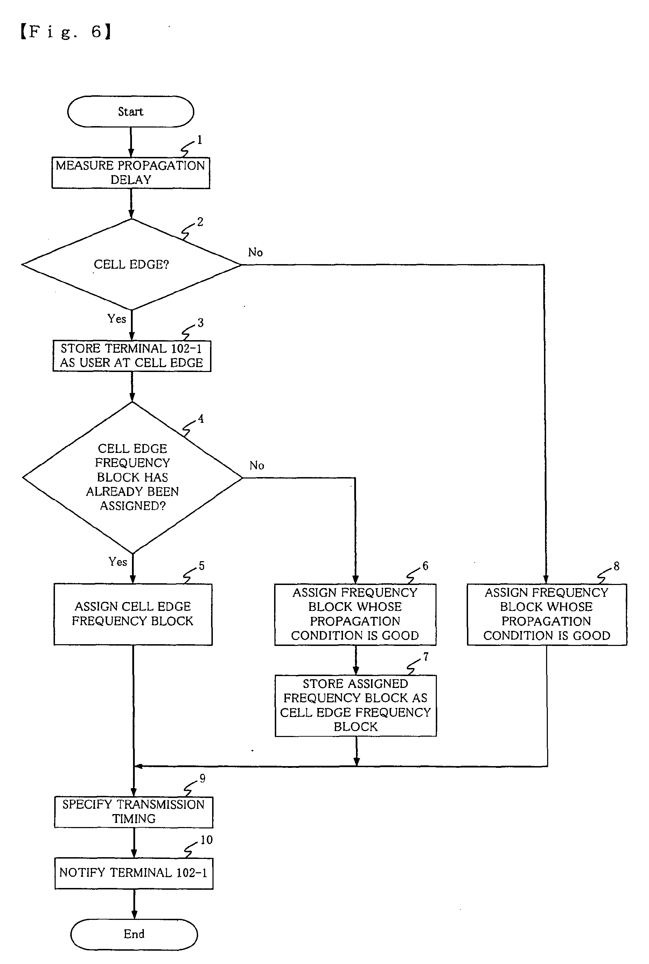

Figure 6 is a flowchart for describing the inter-cell interference reduction method in base station 100-1 shown in Figure 5 in the mobile communication system shown in Figure 4. An inter-cell interference reduction method executed on terminal 102-1 by base station 100-1 will be described here as an example.

First, a propagation delay measurement signal sent from transceiver 201 of base station 100-1 to terminal 102-1 is returned from terminal 102-1 and received by transceiver 201. Then, a time from when the propagation delay measurement signal is sent from transceiver 201 until the time when the signal is received is measured as a propagation delay time by propagation delay measurer 202 in step 1. Although, as one method for measuring propagation delay time, the method that involves using a propagation delay measurement signal that measures propagation delay time, is used here, as described above, the measurement method may be a method which measures a distance from the center of cell 101-1 to terminal 102-1 by calculating the correlation of a pilot signal or the like sent form terminal 102-1. Or, it may be a method which measures a distance from base station 100-1 to terminal 102-1 based on position information from a GPS or the like. It is not particularly limited to carrying out the present invention.

When a propagation delay time is measured by propagation delay measurer 202, whether or not a position at which terminal 102-1 exists is at an edge of cell 101-1 is determined based on the measured propagation delay time by position determiner 203 in step 2.

If it is determined that terminal 102-1 exists at the edge of cell 101-1 in step 2, terminal 102-1 is stored as a user at the cell edge in storage 204 by position recognizer 203 in step 3.

Next, frequency block assigner 205 retrieves whether or not a user at the cell edge other than terminal 102-1 has been stored and whether or not a cell edge frequency block has been assigned to this user in step 4.

If the cell edge frequency block has already been assigned to the user other than terminal 102-1, frequency block assigner 205 assigns this cell edge frequency block also to terminal 102-1 in step 5.

On the other hand, if a cell edge frequency block has not already been assigned to the user other than terminal 102-1 as the result of the retrieval in step 4, frequency block assigner 205 assigns a frequency block whose propagation condition is good to terminal 102-1 in step 6.

Then, the frequency block assigned to terminal 102-1 in step 6 is stored in storage 204 as a cell edge frequency block to be dynamically assigned, by frequency block assigner 205 in step 7. Thus, in storage 204, terminal information (which may be a terminal-specific identification number), information about a position at which the relevant terminal exists (information at least about whether or not the terminal is at a cell edge), and a frequency block used by the relevant terminal, are stored in an associated manner. In addition, from among frequency blocks being used, a frequency block which has been set as a cell edge frequency block is also stored.

In step 2, if it is determined that terminal 102-1 does not exist at the edge of cell 101-1, frequency block assigner 205 assigns a frequency block whose propagation condition is good to terminal 102-1 in step 8.

After processing of step 5, step 7 or step 8, transmission timing of data in the assigned frequency block is scheduled by scheduler 206 in step 9.

Then, the transmission timing scheduled by scheduler 206 is notified from transceiver 201 to terminal 102-1 in step 10.

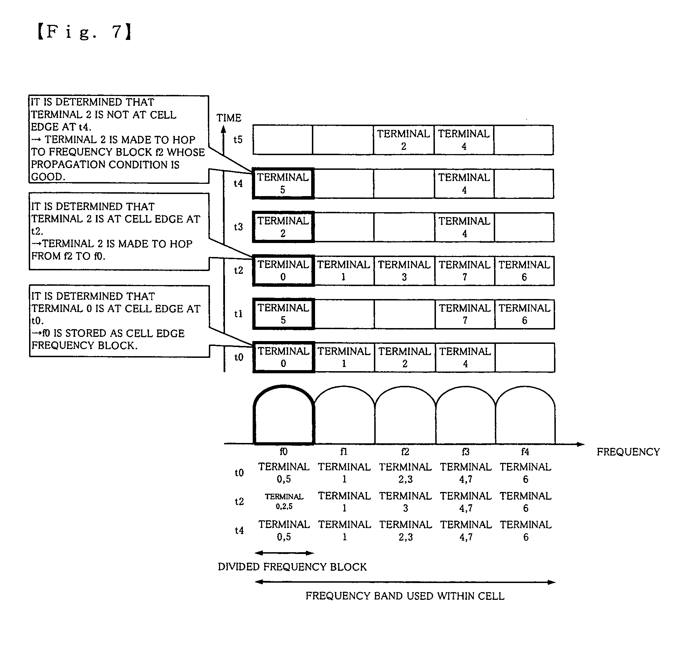

Figure 7 is a diagram for describing details of processing of frequency block assignment and transmission scheduling which is described in steps 5 to 9 of the flowchart shown in Figure 6. For convenience of description, a description will be made using an example in which the number of terminals, terminals 0 to 7, is eight.

First, in a case where terminal 0 is at a cell edge and frequency block f0 is assigned to terminal 0, at t0 on the time axis, frequency block f0 is stored as a cell edge frequency block in storage 204 by frequency block assigner 205.

Then, if terminal 2 which has used frequency block f2 moves to the cell edge, and if position determiner 203 determines that terminal 2 exists at the cell edge at t2 on the time axis, the frequency block to be used by terminal 2 is made to hop to cell edge frequency block f0 which has already been used by terminal 0 that exists at the cell edge. Then, at t3 on the time axis, it is scheduled to use cell edge frequency block f0 by scheduler 206.

Then, at t4 on the time axis, if position determiner 203 determines that terminal 2 which has used cell edge frequency block f0 is not at the cell edge, that is, if terminal 2 moves toward a base station and is out of the cell edge, frequency block assigner 205 measures a frequency block whose propagation condition is good once again and assigns this frequency block. Frequency block f2 is assigned here.

At t5 on the time axis, when cell edge frequency block f0 becomes empty, information of "cell edge frequency block=f0" stored in storage 204 is cleared by frequency block assigner 205.

In this way, a cell edge frequency block is not fixed to a preset frequency block, and a frequency block being used by a terminal existing at the cell edge is stored as a cell edge frequency block in a variable manner in storage 204.

Another inter-cell interference reduction method in base station 100-1 shown in Figure 5 in the mobile communication system shown in Figure 4 will be described below.

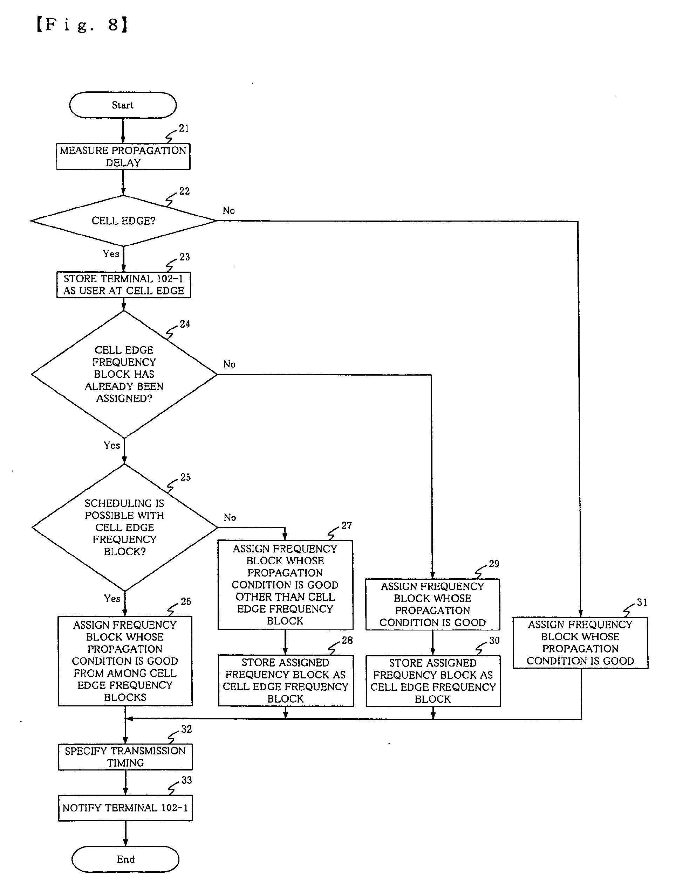

Figure 8 is a flowchart for describing another inter-cell interference reduction method in base station 100-1 shown in Figure 5 in the mobile communication system shown in Figure 4. The inter-cell interference reduction method performed on terminal 102-1 by base station 100-1 as illustrated in Figure 6 will be described here as an example.

First, a propagation delay measurement signal sent from transceiver 201 of base station 100-1 to terminal 102-1 is returned from terminal 102-1 and is received by transceiver 201. Then, a time from when the propagation delay measurement signal is sent from transceiver 201 until the time when the signal is received is measured as a propagation delay time by propagation delay measurer 202 in step 21. Although, as one method for measuring propagation delay time, the method that involves using a propagation delay measurement signal that measures propagation delay time, is used here, as described above, the measurement method may be a method which measures a distance from the center of cell 101-1 to terminal 102-1 by calculating the correlation of a pilot signal or the like sent form terminal 102-1. Or, it may be a method which measures a distance from base station 100-1 to terminal 102-1 based on position information from a GPS or the like. It is not particularly limited to carrying out the present invention.

When a propagation delay time is measured by propagation delay measurer 202, whether or not a position at which terminal 102-1 exists is at an edge of cell 101-1 is determined based on the measured propagation delay time by position determiner 203 in step 22.

If it is determined that terminal 102-1 exists at the edge of cell 101-1 in step 22, terminal 102-1 is stored as a user at the cell edge in storage 204 by position recognizer 203 in step 23.

Next, frequency block assigner 205 retrieves whether or not a user at the cell edge other than terminal 102-1 is stored and whether or not a cell edge frequency block is assigned to this user in step 24.

If the cell edge frequency block has already been assigned to a user other than terminal 102-1, frequency block assigner 205 determines whether or not scheduling is possible based on a respective transmission rate or the like of the terminal which has used the cell edge frequency block in step 25.

If it is determined that scheduling is possible, frequency block assigner 205 assigns the relevant cell edge frequency block also to terminal 102-1 in step 26. At this point, if a plurality of frequency blocks have been set as the cell edge frequency blocks, a cell edge frequency block whose propagation condition is good is assigned from among these plurality of cell edge frequency blocks.

On the other hand, if it is determined that scheduling is impossible in step 25, frequency block assigner 205 assigns a frequency block whose propagation condition is good, from among frequency blocks other than the cell edge frequency block, to terminal 102-1 in step 27.

Then, the frequency block assigned to terminal 102-1 in step 27 is stored as a cell edge frequency block in storage 204 by frequency block assigner 205 in step 28.

If a cell edge frequency block has not already been assigned to a user other than terminal 102-1, as the result of the retrieval in step 24, frequency block assigner 205 assigns a frequency block whose propagation condition is good to terminal 102-1 in step 29.

Then, the frequency block assigned to terminal 102-1 in step 29 is stored as a cell edge frequency block in storage 204 by frequency block assigner 205 in step 30. Thus, in storage 204, terminal information (which may be terminal-specific identification number), information about a position at which the relevant terminal exists, (information at least about whether or not the terminal is at a cell edge), and a frequency block used by the relevant terminal, are stored in an associated manner. In addition, from among frequency blocks that are being used, a frequency block which has been set as a cell edge frequency block is also stored.

In step 22, if it is determined that terminal 102-1 does not exist at the edge of cell 101-1, frequency block assigner 205 assigns a frequency block whose propagation condition is good to terminal 102-1 in step 31.

After processing in step 26, step 28, step 30, or step 31, transmission timing of data in the assigned frequency block is scheduled by scheduler 206 in step 32.

Then, the transmission timing scheduled by scheduler 206 is notified from transceiver 201 to terminal 102-1 in step 33.

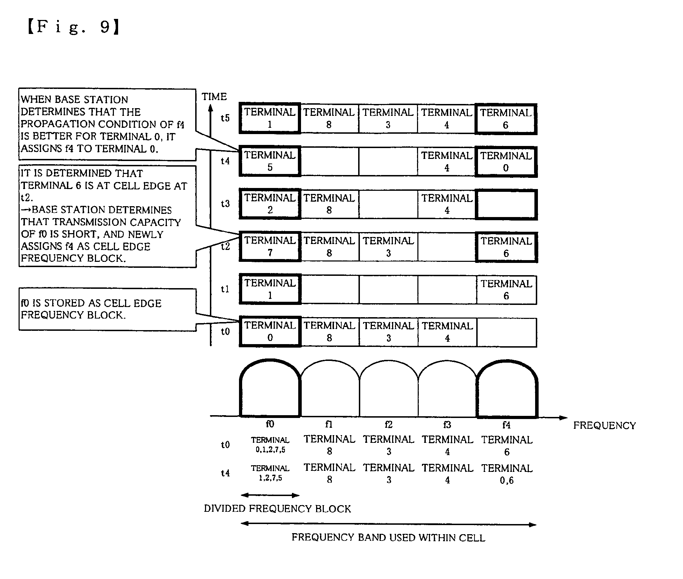

Figure 9 is a diagram for describing details of processing of frequency block assignment and transmission scheduling which is described in steps 26 to 31 of the flowchart shown in Figure 8. For convenience of description, description will be made using an example in which the number of terminals, terminals 0 to 8, is nine.

First, in a case where terminal 0 is at a cell edge and frequency block f0 is assigned to terminal 0, at t0 on the time axis, frequency block f0 is stored as a cell edge frequency block in storage 204 by frequency block assigner 205.

Then, when terminal 6 which has used frequency block f4 moves to the cell edge, position determiner 203 determines that terminal 6 exists at the cell edge at t2 on the time axis. But, if it is determined that the transmission capacity of frequency block f0 fails to meet a desired transmission rate of each terminal, and thus scheduling is impossible, frequency block f4 is newly set as a cell edge frequency block, and cell edge frequency block f4 is assigned to terminal 6 by frequency block assigner 205.

At t4 on the time axis, if frequency block assigner 205 determines that, for terminal 0 that exists at the cell edge, the propagation condition of cell edge frequency block f4 is better than that of cell edge frequency block f0, the cell edge frequency block that is to be used by terminal 0 is made to hop from cell edge frequency block f0 to cell edge frequency block f4.

As described above, even if the transmission capacity of a cell edge frequency block is short and therefore scheduling is impossible, a plurality of cell edge frequency blocks are set so that the transmission rate of a terminal that exists at the cell edge does not deteriorate.

## Claims

1. A mobile communication system including a terminal and a plurality of adjacent base stations which communicate with the terminal wherein said base station divides a frequency used by said base station into a plurality of frequency blocks and assigns said divided frequency block to said terminal,
**characterized in that**
said base station determines a position at which said terminal exists, and if it is determined that said terminal exists at an edge of a cell covered by said base station, sets said assigned frequency block as a cell edge frequency block that is to be dynamically assigned at said edge of the cell.

2. The mobile communication system according to claim 1, **characterized in that** said base station measures a propagation delay time between said base station and said terminal, and determines the position at which said terminal exists based on said measured propagation delay time.

3. The mobile communication system according to claim 1 or 2, **characterized in that,** when it is determined that said terminal exists at said edge of the cell, if said cell edge frequency block has already been assigned to another terminal, said base station assigns said cell edge frequency block, assigned to the other terminal, to said terminal.

4. The mobile communication system according to claim 1, **characterized in that** said base station comprises:
position determination means for determining the position at which said terminal exists; and
frequency block assigning means for, when said position determination means determines that said terminal exists at said edge of the cell, setting said assigned frequency block as the cell edge frequency block that is to be dynamically assigned at said edge of the cell.

5. The mobile communication system according to claim 4, **characterized in that**
said base station comprises propagation delay measuring means for measuring a propagation delay time between said base station and said terminal, and
said position determination means determines the position at which said terminal exists based on said propagation delay time measured by said propagation delay measuring means.

6. The mobile communication system according to claim 4 or 5, **characterized in that,** when said position determination means determines that said terminal exists at said edge of the cell, if said cell edge frequency block has already been assigned to another terminal, said frequency block assigning means assigns said cell edge frequency block, assigned to the other terminal, to said terminal.

7. A base station which communicates with a terminal, divides a used frequency into a plurality of frequency blocks, and assigns said divided frequency block to said terminal,
wherein a position at which said terminal exists is determined, and if it is determined that said terminal exists at an edge of a cell covered by said base station, said assigned frequency block is set as a cell edge frequency block that is to be dynamically assigned at said edge of the cell.

8. The base station according to claim 7, **characterized in that** a propagation delay time between said base station and said terminal is measured, and the position at which said terminal exists is determined based on said measured propagation delay time.

9. The base station according to claim 7 or 8, **characterized in that,** when it is determined that said terminal exists at said edge of the cell, if said cell edge frequency block has already been assigned to another terminal, said cell edge frequency block, assigned to the other terminal, is assigned to said terminal.

10. The base station according to claim 7, **characterized by** comprising:
position determination means for determining the position at which said terminal exists; and
frequency block assigning means for, when said position determination means determines that said terminal exists at said edge of the cell, setting said assigned frequency block as the cell edge frequency block that is to be dynamically assigned at said edge of the cell.

11. The base station according to claim 10, **characterized by** comprising propagation delay measuring means for measuring a propagation delay time between said base station and said terminal,
wherein said position determination means determines the position at which said terminal exists based on said propagation delay time measured by said propagation delay measuring means.

12. The base station according to claim 10 or 11, **characterized in that**, when said position determination means determines that said terminal exists at said edge of the cell, if said cell edge frequency block has already been assigned to another terminal, said frequency block assigning means assigns said cell edge frequency block, assigned to the other terminal, to said terminal.

13. An inter-cell interference reduction method in a mobile communication system including a terminal and a plurality of adjacent base stations which communicate with the terminal, **characterized by** comprising:
processing by said base station to divide a frequency used by said base station into a plurality of frequency blocks;
processing by said base station to determine a position at which said terminal exists;
processing by said base station to assign said divided frequency block to said terminal; and
processing by said base station to, when it is determined that the position at which said terminal exists is at an edge of a cell covered by said base station, set said assigned frequency block as a cell edge frequency block that is to be dynamically assigned at said edge of the cell.

14. The inter-cell interference reduction method according to claim 13, **characterized by** comprising:
processing by said base station to measure a propagation delay time between said base station and said terminal; and
processing by said base station to determine the position at which said terminal exists based on said measured propagation delay time.

15. The inter-cell interference reduction method according to claim 13 or 14, **characterized by** comprising processing for said base station to, when it is determined that said terminal exists at said edge of the cell, if said cell edge frequency block has already been assigned to another terminal, assign said cell edge frequency block, assigned to the other terminal, to said terminal.
